(19) **Europäisches Patentamt European Patent Office Office européen des brevets**

(11) **EP 4 308 460 B1**

(12) **FASCICULE DE BREVET EUROPEEN**

(45) Date de publication et mention de la délivrance du brevet:
**19.11.2025 Bulletin 2025/47**

(21) Numéro de dépôt: **22714492.0**

(22) Date de dépôt: **17.03.2022**

(51) Classification Internationale des Brevets (IPC):
**B64G 3/00** *(2006.01)* **G01V 8/00** *(2006.01)*
**G02B 23/00** *(2006.01)*

(52) Classification Coopérative des Brevets (CPC):
**B64G 3/00; G01V 8/00; G02B 23/00**

(86) Numéro de dépôt international:
**PCT/FR2022/050492**

(87) Numéro de publication internationale:
**WO 2022/195231 (22.09.2022 Gazette 2022/38)**

(54) **SYSTEME DE DETECTION DE LA TRAJECTOIRE D'OBJETS MOBILES**

SYSTEM ZUR ERFASSUNG DES WEGES VON SICH BEWEGENDEN OBJEKTEN

SYSTEM FOR DETECTING THE PATH OF MOVING OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2021 FR 2102684**

(43) Date de publication de la demande:
**24.01.2024 Bulletin 2024/04**

(73) Titulaire: **ALDORIA**
**31000 Toulouse (FR)**

(72) Inventeurs:
• **GIOLITO, Damien**
**75019 PARIS (FR)**
• **LUCKEN, Romain**
**75014 PARIS (FR)**

(74) Mandataire: **IP Trust**
**2, rue de Clichy**
**75009 Paris (FR)**

(56) Documents cités:
**EP-A1- 1 167 997  WO-A1-2015/136102**
**US-A1- 2013 264 463**

• **MONTOJO F J ET AL: "Astrometric positioning and orbit determination of geostationary satellites", ADVANCES IN SPACE RESEARCH, ELSEVIER, AMSTERDAM, NL, vol. 47, no. 6, 22 November 2010 (2010-11-22), pages 1043 - 1053, XP028148291, ISSN: 0273-1177, [retrieved on 20101126], DOI: 10.1016/J.ASR.2010.11.025**

**Description**

Domaine de l'invention

1. Le domaine de l'invention concerne la détection d'objets présents dans l'espace à basse et haute altitudes, par un réseau de télescopes. Plus particulièrement, le domaine de l'invention concerne la détection de satellites et de débris spatiaux ainsi que des aéronefs ou tout mobiles éclairés par le soleil et l'observateur dans la nuit ainsi que le calcul de leur orbite et de leurs trajectoires en vue de prévenir leur chute sur terre, une collision dans l'espace ou l'entrée dans une zone dangereuse.

2. La détection des débris orbitaux est très problématique. En effet, suivre un objet dont la taille peut être inférieure à la dizaine de centimètres, à plusieurs milliers de kilomètres de distance est une tâche ardue.

3. D'autre part, les objets ayant des trajectoires très différentes les unes des autres, il est très difficile pour des raisons économiques de couvrir la totalité de la voute céleste avec les capacités de détection adéquates.

4. L'Esa (Agence Spatiale Européenne) a estimé le nombre d'objet spatiaux satellites actifs comme inactifs, les corps abandonnés lors des lancement de satellites, les coiffes des fusées par exemple, des corps de fusées et des petits fragments à :

- 5.400 débris spatiaux de plus d'un mètre

- 34.000 débris spatiaux de plus de 10 centimètres

- 900.000 débris spatiaux de plus d'un centimètre

- 130.000.000 débris spatiaux de plus d'un millimètre.

5. Actuellement, la surveillance de l'espace proche et notamment des objets présentant un danger potentiel qu'ils soient naturels ou artificiels est devenue un problème majeur pour assurer la sécurité et l'intégrité de toute cible éventuellement visée par une collision.

6. Cette surveillance concerne aussi bien celle de satellites actifs ou en fin de vie ou incontrôlés que des débris provenant de collisions antérieures, de l'usure des objets placés en orbite ou astéroïdes ou comètes potentiellement dangereux pour la Terre.

7. Les agences spatiales et des opérateurs privés ont entamé différents programmes de surveillance regroupés sous la dénomination de « Space Situational Awareness ».

8. Même dans le cas où une météorite est de taille relativement petite, les risques induits par d'une chute restent importants. Il persiste donc un danger pour les populations et les infrastructures à la surface de la Terre pour tout mobile chutant dont la fragmentation dans l'atmosphère peut causer des dommages importants. Un des problèmes rencontrés est le recensement des petits corps du système solaire dont l'orbite coupe celle de la Terre et leur suivi afin d'évaluer leur dangerosité.

9. On recense de plus en plus d'objets artificiels dans les orbites basses ou élevées. L'encombrement spatial semble chaque année plus important dû à la présence de satellites de plus en plus nombreux, et à la multiplication de collisions catastrophiques entraînant une augmentation du nombre de débris. Le mauvais ou le non-suivi de leur trajectoire demeure un problème grandissant.

10. Les projections laissent supposer une situation dans laquelle l'accroissement de la population de débris de taille supérieure à 1 cm entraînera un contrôle et une surveillance de ces derniers de plus en plus difficiles à maintenir. Le seuil de 1cm correspondant à la taille d'un objet pouvant potentiellement rendre un satellite inopérationnel de manière partielle ou complète, eut égard aux vitesses mises en jeu : 3km/s en orbite géostationnaire jusqu'à 8km/s en orbite basse.

11. On appellera ces objets, des « objets spatiaux » dans la suite du texte sachant que cette notion les débris proprement dits, des satellites opérationnels ou non, ou même des météorites.

12. Une première problématique concerne la chute de débris à la surface de la terre et une seconde problématique concerne la collision de débris entre eux ou avec des satellites actifs. La surveillance des débris dans l'espace, et plus particulièrement dans les orbites basses, permet de se prévenir de ces deux conséquences.

13. Enfin, la problématique de surveillance des différents mobiles de l'espace concerne également ceux, par extension, des mobiles discrets se déplaçant à très basse altitude telle que des aéronefs, par exemple des ULM ou des drones, pouvant définir un danger par exemple lorsque leur survol est effectué à proximité d'un site sensible. Une difficulté est de trouver un système optique de grand champ permettant de couvrir une portion significative du ciel avec une résolution suffisante pour détecter des objets à différentes altitudes, lointains et proches, et de suivre des objets à basses altitudes comportant des vitesses élevées et donc difficilement détectables.

14. En effet, un problème de la détection et de la surveillance de débris spatiaux, dont on ne connaît pas à priori l'orbite et/ou la trajectoire, est la prise en compte de l'intensité lumineuse de sources tierces qui perturbe les détections.

15. Ces sources peuvent provenir de la voûte céleste, du soleil, de la lune et des conditions météorologiques locales altérant la stabilité des conditions de prises de vue. Le système de surveillance doit pouvoir prendre en compte une multitude de conditions de luminosité permettant de maximaliser des détections en toute circonstance. La détection s'effectuant en considérant un point ou une zone de la surface du globe, la condition du champ de vue de l'observateur est une donnée extrêmement importante dans le calcul de la probabilité de détection d'un mobile et du calcul de sa trajectoire.

16. La problématique de surveillance des débris concerne différentes orbites à prendre en compte dans les méthodes de détection de mobiles de l'espace. En ce qui concerne les objets naturels tels que les météorites, leur orbite est généralement hélio centrée, ce qui signifie que les météorites peuvent potentiellement s'approcher de la Terre à n'importe quelle altitude et dans n'importe quelle direction. En ce qui concerne les objets artificiels, leur orbite terrestre peut être comprise dans différentes familles d'orbites.

17. La première famille d'orbites est connue sous l'acronyme LEO, désignant « Low Earth Orbit » dans la terminologie anglo-saxonne. Il s'agit d'une famille d'orbites basses allant jusqu'à 2000 km. Cette famille d'orbites est très occupée par des satellites de communications, militaires, détection, météorologiques, etc.

18. Une seconde famille d'orbites est connue sous l'acronyme GEO, désignant « GeostationaryOrbit » qui comprend une orbite géostationnaire définie à 35784 km au-dessus de l'équateur. Une révolution d'un mobile à cette altitude est de 24h. Le mobile se situant à une orbite géostationnaire est fixe par rapport à une position terrestre. Cependant des débris peuvent quitter leur orbite et avoir des orbites défilantes. Cette orbite est très occupée par les satellites de communication (militaires ou civils), de télédétection, de météorologie, etc.

19. Une troisième famille d'orbites est plus connue sous l'acronyme MEO, désignant « Médium EarthOrbit » qui est une famille d'orbites moyenne, généralement elliptique. C'est le cas des satellites GNSS.

20. Une quatrième famille d'orbites est désignée par l'acronyme HEO, orbites fortement elliptiques (en anglais « highly elliptical orbits ») dont les orbites très elliptiques comme par exemple les orbites Molniya ou Tundra qui permettent de communiquer ou de surveiller les régions de latitudes élevées.

21. Une cinquième famille d'orbites est désignée par l'acronyme GTO signifiant : « Orbite de transfert géostationnaire « Geostationary Transfer Orbit ». Cette famille comprend des orbites elliptiques. Leur apogée est de l'ordre de 42000 km et leur périgée est de l'ordre de 650km. Cette famille d'orbites est très pratique pour injecter des satellites dans une orbite géostationnaire, elle est donc utilisée lors des lancements de satellites comme une orbite de transition pour une mise en orbite géostationnaire.

22. Aujourd'hui différentes méthodes de détection de débris spatiaux et de leur trajectoire existent.

23. Notamment, il existe une famille de méthodes dites « méthodes actives », notamment pour la détection de débris dans des orbites LEO (orbite terrestre basse, en anglais « low earth orbit »). Les méthodes actives reposent sur un fonctionnement de type « radar » dans lequel un mobile est éclairé par une source émettrice d'un signal. Le signal est ensuite réfléchi et c'est la réflexion du signal qui informe un récepteur de données de positions du mobile.

24. Un premier inconvénient de cette méthode est que la puissance reçue varie comme $1/d^4$, où « d » est la distance du mobile à l'émetteur/récepteur. En conséquence, le flux reçu restera faible lors de la détection, même si une forte puissance d'émission est envisagée.

25. Un second inconvénient est l'installation relativement importante de système de type radar que cette méthode impose. Ces installations sont coûteuses et nécessitent une maintenance importante et sont facilement détectables. En outre, ces systèmes consomment beaucoup d'énergie et doivent en conséquence être installés près d'un réseau électrique.

26. Parmi les méthodes actives, il existe également les LIDAR qui reposent sur une illumination d'un mobile par un Laser. Cette méthode permet d'atteindre de meilleurs résultats que celles du radar en termes de puissance détectée car la lumière du laser est mieux focalisée. En revanche, les cônes de détection sont beaucoup plus faibles et sont peu adaptés aux détections « en aveugle » de mobiles situés à des orbites basses et elliptiques. Une autre famille de méthodes existe, ce sont les méthodes passives. Appliquées au radar, ces méthodes mettent en jeu des installations de réception uniquement. Elles doivent donc être placées à proximité de source d'émission radar puissante. Sont également considérées comme passives les technologies de détection pour lesquelles les cibles ne sont pas éclairées par une source terrestre. En ce qui concerne les méthodes passives, le flux lumineux capté par un détecteur varie avec la distance « d » au mobile comme une fonction de $1/d^2$ ce qui offre de meilleurs résultats que les méthodes actives sur le flux lumineux captés en provenance du mobile. En revanche, l'inconvénient majeur est la forte dépendance aux illuminations issues de sources externes comme le soleil, les étoiles ou la lune. L'avantage de ces solutions réside en leurs faibles coûts et dans la relative simplicité de leur mise en œuvre à partir de détecteurs reposant sur des instruments optiques capables de visualiser des objets de petites tailles à toutes les altitudes.

27. En ce qui concerne les mobiles de l'orbite géostationnaire, un télescope ou un radar ou tout autre moyen électromagnétique pourra détecter un point immobile sur un fond d'étoiles en mouvement pendant le temps de la pose. Avec un télescope de grand champ, il est alors possible de détecter des mobiles spatiaux sur une ceinture géostationnaire ainsi que leur trajectoire.

28. Dans le cas des autres orbites, dites « défilantes » donc non géostationnaires, c'est-à-vis d'un point d'observation de la terre, il est difficile de détecter des mobiles spatiaux, leur hauteur, leur inclinaison, les différents nœuds de leur orbite, dont les nœuds ascendants et descendants.

29. Une difficulté provient de la vitesse de défilement des mobiles spatiaux qui peut dépasser 1 °/s au zénith pour une orbite basse. La détection se fait par la capture d'une trace (sur une suite d'image) vis-à-vis de traces ponctuelles ou de traînées en fonction du mouvement sidéral et donc de la fenêtre d'observation dans le ciel.

30. La méthode consiste alors à discriminer les traces, pour détecter la présence d'un débris spatial. Si l'inclinaison peut être éventuellement détectée en fonction de l'analyse de la trace laissée par le mobile, en revanche, il reste très difficile d'obtenir l'altitude réelle du mobile du fait de l'inconnue de sa distance. Elle peut toutefois être estimée grâce à la vitesse du mobile. De ce fait, il est difficile de déduire des éléments de sa trajectoire par une extrapolation des analyses des traces. Dans le cas général, il est nécessaire d'avoir trois mesures de position angulaire du mobile pour dériver son orbite. Deux mesures suffisent si le mobile est sur une orbite circulaire.

31. Le problème peut se résoudre en augmentant le champ d'un télescope pour augmenter les traces et leur nombre mais les images détectées, comme expliqué précédemment, peuvent devenir difficiles à analyser du fait du nombre, de la complexité des télescopes à mettre en œuvre, de la pollution lumineuse environnante, de la confusion forte provoquée par l'ensemble des objets du champ, et de la très grande taille des capteurs nécessaires.

32. Par ailleurs, la construction d'un télescope au large champ n'est guère envisageable au-delà de quelques degrés, contrairement aux objectifs photographiques.

33. En effet, une optique de grand champ permet de déduire des informations quant à la trajectoire du mobile ; en revanche, un grand champ est plus susceptible d'être affecté par des sources de lumières parasites. En outre, il reste très difficile de concevoir des télescopes de grands champs sans rencontrer des problèmes de conception, de complexité de schéma optique spécifique et de couts énormes de construction. La présence d'un grand plan focal entraine également de nombreuses aberrations. Lorsqu'un détecteur électronique est couplé à une optique de grand champ, il doit être de très grande taille ; les tailles et le nombre de pixels peuvent être très grands et les coûts de fabrication et conception sont importants et l'exploitation est difficile.

État de la technique

34. Il existe des systèmes de télescopes permettant d'obtenir de très grand champ en couplant une matrice de télescopes de grand champ formant un champ unique .

35. Le brevet français FR3018612 [WO2015136102] décrit une autre solution connue de détection d'un mobile dans l'espace caractérisé en ce qu'il comprend :

- une génération d'une pluralité de champs de vue (Zkp) au moyen d'un premier ensemble de télescopes (T), chaque télescope définissant un télescope de détection, l'ensemble des champs (FOV) de chaque télescope (Ty) ayant une distribution spatiale dans au moins un plan de l'espace s'inscrivant dans une forme géométrique ouverte (CC), ladite forme géométrique ouverte (CC) définissant un champ large de détection ;

- une détection d'au moins une trace d'un mobile (M-i) dans le champ (FOVy) d'au moins un télescope (Ty) par un détecteur électronique couplé à chaque télescope (Ty), le temps d'intégration du détecteur électronique étant défini pour obtenir un étalement de la trace sur plusieurs pixels du détecteur électronique pour une vitesse de défilement maximale (VM) donnée d'un mobile et une altitude minimale de son orbite ;

- une déduction d'une trajectoire (TJSAT) du mobile (M-i) dans le plan image dudit télescope (Ty).

36. La société ASTRIUM propose une autre solution décrite dans le document de brevet US2013/264463. Ce brevet décrit un système optique pour système de veille spatiale caractérisé en ce qu'il comporte une matrice de NxP télescopes chacun à champ supérieur ou égal à 5° et préférablement supérieur ou égal à 10°, lesdits télescopes étant couplés à NxP capteurs d'images de sensibilité adaptée à un temps d'intégration de l'ordre de grandeur de 10 à 100 millisecondes, les télescopes étant montés sur une ou plusieurs montures motorisées, les télescopes étant asservis ensemble et regroupés de manière à fonctionner simultanément pour offrir un champ large et en ce que la vitesse de déplacement des montures des télescopes est telle que chaque objet traversant la zone balayée est détecté au moins trois fois en sorte d'obtenir au minimum 3 mesures de position datées réparties sur l'arc de transit de l'objet dans la zone de ciel, le temps de pose ou temps d'intégration étant défini pour obtenir un étalement du signal sur plusieurs pixels.

37. Un inconvénient de cette solution est le coût d'un tel système qui nécessite de nombreux télescopes de très grand champ (plusieurs milliers). Une solution est de réduire le nombre de télescopes et d'associer un système de suivi motorisé avec des télescopes de champs plus larges ayant au moins un champ de 5°, et en pratique 14° dans l'exemple cité dans le document de brevet (10° x 10° sur le détecteur carré).

38. Le brevet US7105791 décrit un système permettant d'utiliser une image du Soleil pour détecter des objets voyageant dans l'atmosphère terrestre. Le système comprend un récepteur pour collecter la lumière solaire incidente (énergie solaire) et un dispositif sensible à la lumière qui produit un signal en réponse à l'exposition à la lumière. Un processeur de signal qui est couplé au dispositif photosensible, le processeur de signal détectant la lumière solaire incidente collectée et est programmé pour fournir un signal de sortie correspondant pour fournir un signal de détection en réponse à une ombre qui se déplace à travers le dispositif photosensible.

39. Le brevet EP1167997B1 propose une autre solution de mesure de pollution spatiale, destiné à être embarqué sur satellite, comportant : au moins un illuminateur laser pouvant émettre dans l'espace un faisceau laser; des moyens de réception du signal rétroréfléchi par des débris spatiaux; des moyens de détection des débris spatiaux qui traversent le faisceau laser, déterminant la position angulaire desdits débris ; des moyens de localisation distance des débris détectés, déterminant les distances des débris détectés par rapport au satellite à l'aide du caractère impulsionnel et/ou modulé de l'émission du faisceau laser ; des moyens de classification des débris localisés, déterminant pour chaque débris localisé le produit de son albédo moyen par sa surface apparente.

Inconvénients de l'art antérieur

40. Les solutions de l'art antérieur nécessitent des équipements couteux pour assurer une couverture significative de la voute céleste (plusieurs dizaines de degrés), avec des télescopes à grand champs de vue ou avec un grand nombre de télescopes terrestres ou embarqués sur des satellites couvrant un champ important.

Solution apportée par l'invention

41. Afin de répondre à ces inconvénients, il est primordial de cataloguer l'ensemble des débris potentiellement dangereux et de leur associer des paramètres orbitaux valides qui permettent de décrire leurs trajectoires. Observés depuis un point fixe sur la Terre, les objets en orbite basse présentent comme caractéristiques de défiler rapidement sur la voute céleste. En outre, à chaque instant plusieurs objets traversent la voute céleste en plusieurs endroits. Selon ses paramètres orbitaux chaque objet traverse la voute céleste locale à intervalles temporels plus ou moins réguliers, allant de quelques dizaines de minutes à plusieurs heures.

42. A cet effet, l'invention concerne selon son acception la plus générale un système de détection de la trajectoire d'objets mobiles caractérisé en ce qu'il comporte une plateforme rotative dans un plan azimutal supportant une pluralité de télescopes orientés chacun avec une hauteur comprise entre 35 et 85°, de, chacun desdits télescopes présentant un champ de vue compris entre 2 et 6 degrés carrés et comportant un capteur de NxM pixels d'une largeur L chacun. Le système comportant un calculateur pour enregistrer les images horodatées fournies par le capteur de chacun desdits télescopes et pour calculer la trajectoire d'un objet céleste en fonction des traces lumineuses dudit objet céleste sur une première image I1 et sur une deuxième image I2.

43. Avantageusement, ladite plateforme est animée par une rotation sautante « pas à pas ».

44. De préférence, ladite plateforme supporte soit quatre télescopes écartés chacun de 90°, soit 6 télescopes écartés à 60°, soit 8 télescopes écartés de 45°.

45. Selon un mode de réalisation particulier, les télescopes tournent pas à pas avec une rotation de plusieurs degrés par seconde, fonction de l'angle entre les télescopes, du champ de vue des télescopes et de leur élévation par rapport à l'horizon. Description détaillée d'un exemple non limitatif de réalisation.

46. La présente invention sera mieux comprise à la lecture de la description qui suit, concernant un exemple non limitatif de réalisation illustré par les dessins annexés où :

[FIG. 1] La figure 1 représente une vue schématique en perspective d'une plateforme tournante selon l'invention.

[FIG. 2] La figure 2 représente une vue schématique en coupe d'une plateforme tournante selon l'invention.

[FIG. 3] La figure 3 représente une vue schématique de deux prises de vues.

[FIG. 4] La figure 4 représente une vue schématique de la cinématique de la plateforme portant les télescopes rotatifs par rapport à la plateforme.

[FIG. 5] La figure 5 représente une vue schématique d'un cycle de déplacement d'un télescope.

[FIG. 6] La figure 6 représente une vue schématique de l'implantation géographique des ensembles de télescopes.

[FIG. 7] La figure 7 représente une vue schématique d'une collision prédite et la mise en évidence par des ellipsoïdes les incertitudes sur les positions, permettant d'établir les probabilités de collision.

[FIG. 8] La figure 8 représente l'architecture fonctionnelle du traitement des images.

[FIG. 9] La figure 9 représente l'architecture fonctionnelle du bloc de traitement 1 de prétraitement local des données.

[FIG. 10] La figure 10 représente l'architecture fonctionnelle du bloc de traitement 2 de classification des objets.

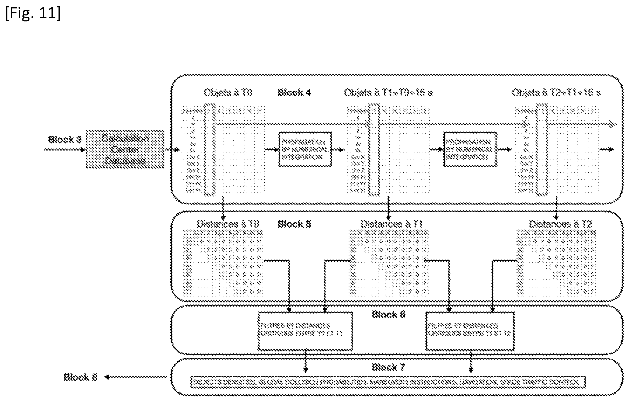

[FIG. 11] La figure 11 représente l'architecture fonctionnelle des blocs 4 à 7.

<u>Principe de l'invention</u>

47. L'invention a pour but de fournir un moyen de détection optique d'objets célestes dans un angle solide très ouvert d'environ 1 stéradian (entre 30 et 120 degrés dans un plan), avec une résolution suffisante pour détecter un objet de quelques centimètres de section depuis les orbites bases, jusqu'aux orbites géostationnaire. (Cette remarque pour contrer les arguments que l'optique ne peut être utilisée en basse orbite à cause de la vitesse de passage des satellites). Aucune installation d'observation présente actuellement des caractéristiques optiques permettant de répondre à un tel cahier des charges, seul un réseau d'un grand nombre de télescopes permettrait d'atteindre cette performance, mais ceci se ferait à des couts prohibitifs.

48. L'invention est basée sur :

- un premier postulat qu'un objet céleste passera nécessairement dans une couronne annulaire centrée autour d'un axe, celui-ci pouvant être zénithal, polaire ou choisi.
- un second postulat qu'il est possible de couvrir une telle couronne annulaire avec un réseau de N télescopes de champ de vue limité de 360/N,
- <u>et un troisième postulat qu'il est possible d'émuler un tel réseau avec un nombre inférieur de télescopes que l'on fait tourner à une vitesse suffisante pour que l'objet soit vu pendant son déplacement au moins trois fois.</u>

49. Le système selon l'invention permet

- La détection des petits objets, en quantités massives, en orbite basse qui sont trop rapides par les méthodes optiques conventionnelles, contrairement à l'usage de la technologie radar en général.
- La détection se fait sous forme de traces laissées par l'objet dans les images (mode veille /passif - au contraire du mode« tracking » : horodatage des deux extrémités de la droite (ouverture et la fermeture horodatés), longueur de la trace.
- Par réduction astrométrique et utilisation de la datation d'exposition (sub-millisecond), il est possible de déterminer une trajectoire initiale, dont la précision augmente au fur et à mesure des observations.

    - L'ensemble des trajectoires reconstituées permettent de créer un catalogue d'objet et de le maintenir dans le temps.

50. L'avantage technique résultant de l'invention est de permettre une limitation du nombre de stations dans le monde ; avec un grand champ (3 à 6°) et un nombre limité de télescopes par station, tout en préservant une très grande sensibilité de détection pour capturer les petits objets et une capacité de créer et maintenir un catalogue d'objet sur tous les orbites, mais particulièrement en orbite basse.

<u>Principales caractéristiques de l'invention</u>

51. Le système est basé sur l'observation de veille d'une couronne d'observation à une certaine élévation, afin de capturer tous les objets qui traversent cette couronne. (Au contraire de l'observation d'un quartier de ciel). Le système profite du temps de passage d'un objet dans le champ du télescope, (au moment de la prise de vue) pour faire tourner les télescopes selon un axe vertical (pointant vers le zénith) sans rater la détection d'objets.

52. Dans le cas de 4 stations d'observations (comprenant chacune 4 télescopes) et pour un objet de temps de passage dans un champ de 5°, les stations ne sont pas situés tous sur la même latitude pour compenser les saisons et permettre de capturer des objets à toutes latitudes. Elles sont également réparties sur les longitudes , pour en avoir toujours une observation dans la nuit.

53. Un objet à 400km à une vitesse moyenne relative de 0,5°/s, met 10s pour parcourir un champ de 5° Pendant ces 10s, la caméra N+1 doit s'être substitué à la caméra N, avant que l'objet ne sorte du champ.

54. Les relations entre:

- V: vitesse de rotation de l'objet relative à la position de l'observateur à une altitude et élévation donnée
- C: champ vertical et horizontal de la caméra
- N: Nombre de télescopes
- T: temps de traversée de l'objet dans le champ C
- P: nombre de pas de rotation de C degré horizontaux par seconde
- E: Élévation d'objet par rapport au plan horizontal au pied de l'observateur.

Sont

$$- \quad T \times V = C$$

- P x C = 360 , Cos E / N / T dans l'exemple. P x 5° = 360 / 4 /10 => P=1,5 pas par seconde

55. Le nombre de pas total avec N télescopes est, :

- pour E = 0° => Ptot = 360 / C ;
- E= 40° => Ptot = 360 x cos 40 / C

Avec P = Ptot / C / T.

56. Le choix de l'élévation est un compromis :

- Plus l'objet est bas sur l'horizon, plus sa vitesse de rotation relative sera lente, mais plus l'objet sera loin Plus l'objet est proche du zénith, plus il sera proche mais plus sa vitesse de rotation sera rapide.
- Le temps de pose de chaque image est lié à la vitesse instantanée de l'objet en fonction de son altitude. C'est le temps que l'objet passe dans un pixel, multiplié par au moins 50, de manière à ce que les traces fassent 50 pixels minimum pour les détecter correctement de manière automatique.

57. Pour cette raison, la vitesse de rotation du télescope est asservie à l'élévation :Plus c'est bas, plus l'objet est lent. Plus il est au zénith plus il est rapide.

Alternative mettant en œuvre des plateformes rotatives

58. Ces postulats conduisent à une solution constituée par une plateforme supportant plusieurs télescopes en rotation, quatre dans l'exemple décrit à titre d'exemple non limitatif, pour une application de veille spatiale (Space Situational Awareness« SSA »), pour la surveillance d'objets proches de la Terre, pour détecter des objets naturels, tels que les astéroïdes et les comètes, qui peuvent percuter la Terre et pour la surveillance de l'espace, pour le suivi des satellites artificiels et des débris spatiaux actifs et inactifs et l'estimation des trajectoires et des risques de collisions. L'objectif de l'invention est l'optimisation du nombre de télescopes nécessaires aux activités de veille afin de réaliser une surveillance globale des objets en orbite pour une fraction du cout des installations actuelles.

59. Cette manière de procéder permet de compenser le nombre limité de télescopes par rapport à la solution précédente, par un balayage obtenu par la rotation synchronisée des appareils de mesure optiques pointant chacun dans des directions opposées d'angle 360°/N télescopes.

60. Le système de détection en couronne d'observation permet de détecter chaque objet à deux endroits très éloignés dans le ciel, ce qui, combiné avec la double mesure au passage de celui-ci dans le champ de la couronne amène un nombre et une très grande qualité dans les positions observées. Ces 4 positions dans l'espace et dans le temps, permettent de faire une très bonne approximation immédiate de la trajectoire de l'objet.

61. Ceci implique pour le système de calcul d'être en mesure de reconnaitre que l'objet mesuré une première fois sur la couronne d'observation est bien le même que celui mesuré à telle position une 2ème fois sur la couronne d'observation. Les deux mesures prises lors de la première traversée de couronne permettent d'établir une prédiction du 2ème passage sur la couronne. Il convient donc pour l'algorithme de vérifier les traces détectées au voisinage du temps et de la position prédite afin d'établir les correspondances avec un degré optimal de confiance.

## Description matérielle de la plateforme

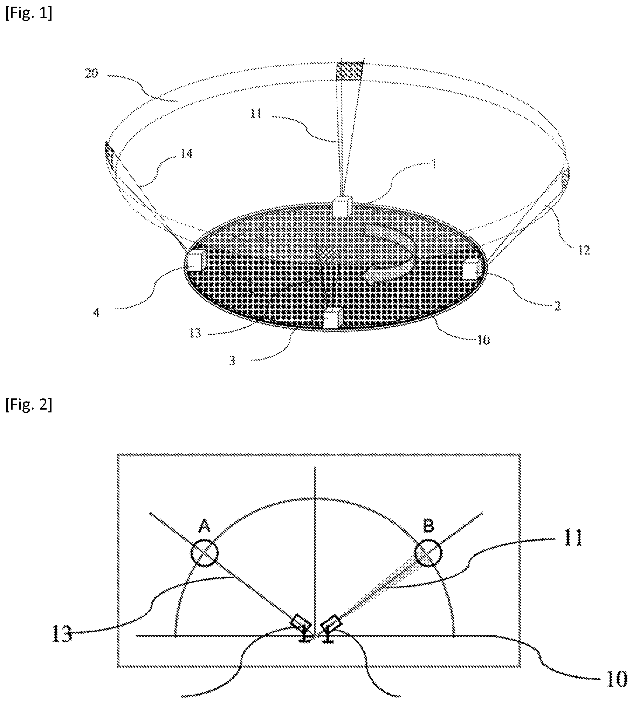

62. Les figures 1 et 2 représentent de manière schématique une plateforme selon l'invention. Cette plateforme (10) placée dans un plan azimutal porte quatre télescopes (1 à 4) écartés de 90°. Chaque télescope est entrainé en rotation par rapport à un axe zénithal avec un mouvement saccadé de type pas-à-pas qui sera détaillé ci-après.

63. La plateforme (10) supportant les télescopes (1 à 4) est fixe. Optionnellement, elle peut être animée par une rotation constante, de préférence sautante, de manière synchronisée avec la rotation des télescopes (1 à 4).

64. Alternativement, les télescopes peuvent être animés avec un mouvement de rotation constant, la liaison entre chaque télescope (1 à 4) et la plateforme (10) étant assurée par un mécanisme oscillant selon une direction tangentielle autour d'une position médiane.

65. La hauteur des télescopes est de 66° et leur angle de champ de 4 degrés carrés. Chaque téléscope comporte un capteur de N-M pixels.

66. Les objets spatiaux sont détectés sous forme de stries dans les images d'astrophotographie qui sont traitées pour la conversion RA-DEC et la détermination de l'orbite. La capacité de détection des objets spatiaux dépend du temps passé par l'objet sur un pixel, particulièrement dans le cas d'objets en orbite basse à une altitude de l'ordre de 2000 km, où la vitesse angulaire est élevée. Par conséquent, une augmentation du temps d'exposition n'améliore pas la détection, comme c'est le cas dans la photographie conventionnelle des corps célestes.

67. A titre d'exemple les télescopes (1 à 4) sont des télescopes réflecteurs à obstruction centrale comportant un miroir primaire de grand diamètre par exemple des astrographes avec le capteur situé à la place du miroir secondaire), présentant les caractéristiques suivantes

- Longueur focale : 790 millimètres

- Ouverture : 356 millimètres

- Obstruction : 0,44%

- Résolution : 0,39 secondes d'arc

- Capteur : 4000x4000 pixels d'une largeur de 15 microns.

68. Pour un objet présentant un diamètre de 5 centimètres situé à 1000 km, les paramètres d'un objet spatial résident à une distance de 1000 km d'altitude sont donnés.

69. Le temps sur un pixel est de 6,5 ms pour un pixel de 15 microns. Par conséquent, si l'on considère une longueur minimale de traînée de 50 pixels (pour une détection correcte de la traînée), le temps d'exposition minimal serait de 300 ms. Le même calcul à 400 km donne un temps d'exposition de 150 ms.

70. Il est nécessaire d'obtenir au moins trois observations du même objet pour effectuer une détermination initiale correcte de l'orbite avec les conséquences suivantes :

- Il n'est pas nécessaire de capturer une partie complète du ciel, mais de capturer le même objet aux différents endroits. Cela ouvre la possibilité de ne capturer qu'une "tranche" du ciel, l'important étant la détection de l'objet lors de la traversée de la tranche, comme indiqué dans la figure 2.

71. Un objet en orbite, a besoin de quelques minutes pour traverser le ciel et de quelques secondes pour franchir le champ de vue du téléscope. Comme il suffit d'une ou deux stries (31, 41) en A et B, une capture continue n'est pas nécessaire. Ce qui est important, c'est la capture du même objet deux fois, mais cela peut se faire avec un intervalle de plusieurs secondes, en deux images (30, 40) comme illustré schématiquement par la figure 2.

72. La rotation du télescope exploite l'intervalle de temps entre deux images (30, 40) pour capture l'objet à minima 2 fois sur 2 images différentes.

## Acquisition des images

73. Avec quatre télescopes par plateformes et pour couvrir 90° en azimut à une élévation de 66°,'un champ de vue de 4° est possible. Cela représente 23 s entre la première et la dernière image (4°/0,17) pour des objets à une distance de 2000 km. Sur les orbites inférieures, cet intervalle de temps pourrait être inférieur (13 s à 400 km).

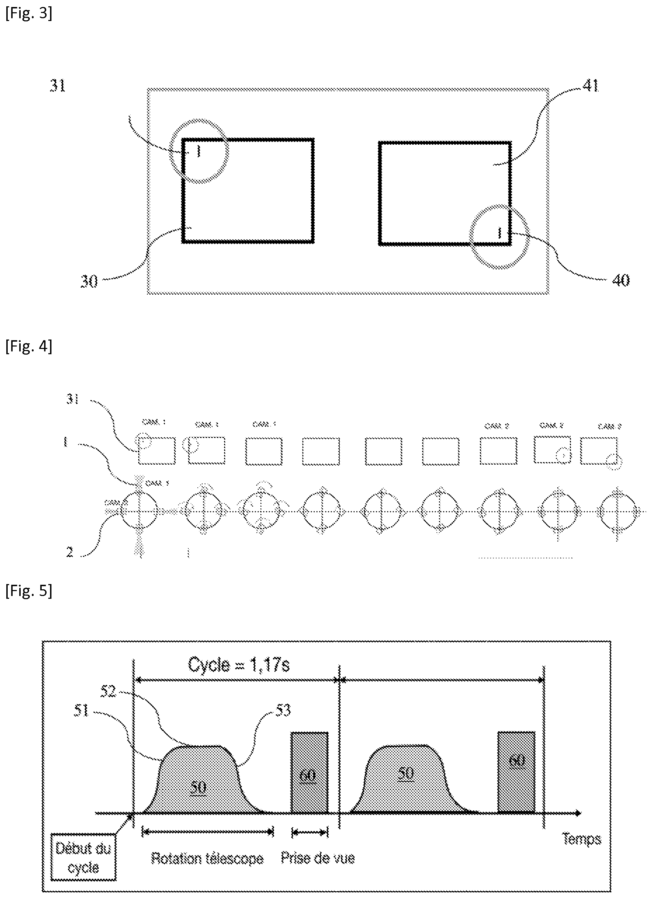

74. Par conséquent, si deux télescopes (1, 2) sont pointés à un angle de 90° vers l'extérieur, il reste 23s pour que la deuxième caméra (2) prenne la position de la première caméra (1). Dans ce cas, la bande supérieure gauche est capturée par la caméra (1), et la bande inférieure droite par la caméra (2), comme indiqué sur la figure 4. Ainsi, un seul télescope suffit pour couvrir 90°.

75. La figure 4 illustrent schématiquement la situation où quatre télescopes pivotants (1 à 4) sont supportés par une plate-forme (10), chacun d'eux sur une monture ALT-AZ, et chacun d'eux est orienté à 90° l'un de l'autre. En supposant que chaque seconde, les télescopes tournent de 11,25° (1/8 de 90°, après 8s, la caméra (2) peut capturer la strie qui a été capturée par la caméra (1). Dans cet exemple, si le temps nécessaire à la caméra (2) pour prendre la place de la caméra (1) est inférieur à 23s, aucun objet n'est laissé non détecté, comme l'illustre la Fig.4.

76. Dans cet exemple, la séquence de déplacement, sur une seconde, est la suivante :

- Rotation de 11,25°.

- Stop

- Déclenchement de chaque caméra est déclenchée pendant 300ms

- Rotation de 11,25°.

- Etc...

77. La plateforme (10) est optionnellement animée par une rotation sautante, présentant un profil de vitesse similaire à celui de l'aiguille d'une montre à heure sautante, avec une pas angulaire de 11,25° comprenant une alternance de déplacement rapide de 11,25°, d'arrêt pendant le temps d'acquisition de l'image, environ 300 ms, de redéplacement d'un pas angulaire, et ainsi de suite.

78. Par ailleurs, le suivi sidéral est en permanence en fonction, pour éviter le temps de stabilisation du télescope au moment du démarrage du suivi.

Format des données délivrées par chaque télescope (1 à 4)

79. Chaque télescope est équipé d'un capteur de NxM pixels fournissant des images numériques correspondant au temps d'exposition. Chaque image contient un fond d'étoiles fixes ainsi que des traces formées par des stries (streaks en anglais). Ces traces correspondent au déplacement des objets mobiles, pendant la durée comprise entre le début et la fin de l'acquisition d'une image. Le temps d'acquisition est déterminé de sorte à ce qu'une strie couvre une valeur médiane de 50 pixels.

80. Chaque image permet d'extraire des données sous la forme de coordonnées horodatées avec une résolution d'au moins une milli-secondes du début et de la fin de la strie.

81. Ces coordonnées sont déterminées par une réduction astrométrique à partir d'un catalogue par exemple SKY2000 ou TYCHO-2, ou USND-SA (nom commerciaux) par un traitement de mise en correspondance. A titre d'exemple, on distingue une vingtaine d'étoiles dans un champ de 3°x3° avec un temps d'exposition de 300 ms, constituant des motifs permettant de les caractérisées par un algorithme de mise en correspondance avec les données d'un catalogue d'étoiles.

82. L'ensemble des données ainsi recueillies pour chacune des images de chacun des télescopes sont centralisées sur un serveur pour permettre la reconstruction des trajectoires des objets célestes mobiles dont les traces ont été enregistrées sur différentes images sous une forme horodatée. L'estimation des trajectoires orbitales pour chaque objet permet de déterminer pour chacun des objets s'il appartient ou pas à la trajectoire orbitale, pour construire un catalogue de trajectoires orbitales des objets mobiles observés.

Exemple d'application

83. Le tableau ci-dessous donne les valeurs de vitesse de rotation moyenne des objets spatiaux dans le repère de l'observateur, le temps passé par l'objet dans l'angle de champ du pixel de la caméra et le temps d'exposition nécessaire à la réalisation d'une trace de 50 pixels. (RSO = resident space object).

[Table1]

| RSO (route par pays survolé) distance à la terre | Km | 250 | 500 |
|---|---|---|---|
| Calcul sur l'arc local | | | |
| Angle local de l'arc vu (sur 180°) | ° | 30,47 | 42,45 |
| Durée sur l'arc | S | 480 | 705 |
| Vitesse angulaire locale (sur 180°) | °/s | 0,38 | 0,26 |
| Durée sur un pixel | S | 0,0023 | 0,0035 |
| Temps d'exposition pour une ligne de 50 pixels | Ms | 115 | 175 |
| Durée dans un champs de vue de 4° | S | 10,5 | 16,4 |

85. Dans l'exemple à 250km d'altitude la vitesse moyenne de rotation de l'objet dans le repère de la station est de 0,38°/s. Il met 10,5s pour parcourir la totalité du champ d'observation de 4°. C'est le temps maximum pour que la CAM2 ait le temps de prendre une image du même objet que CAM1 tant qu'elle est dans le champ.

86. Le tableau ci-dessous indique les différentes vitesses de rotation du télescope, en fonction de l'élévation de la couronne d'observation.

[Table2]

| Vitesse de rotation en fonction de l'élévation | | | | |
|---|---|---|---|---|
| Angle Elevation (°) | Nbre de télescopes fixes pour couvrir 360° | Nombre de pas de 4° pour couvrir 90° | Vitesse de rotation pour que CAM1 remplace CAM2 (10,5s) (°/s) | Nombre de secondes par pas de 4° |
| 36,8 | 72 | 18 | 6,9 | 0,58 |
| 66,4 | 36 | 9 | 3,4 | 1,17 |
| 78,45 | 18 | 5 | 1,7 | 2,33 |
| 84,25 | 9 | 2 | 0,9 | 4,67 |

88. Les valeurs de la vitesse de rotation indiquée est une valeur moyenne. Si nous prenons l'exemple de l'élévation de 66,4°, un pas de 4° de rotation doit être effectué en 1,17s. Pendant ce laps de temps, la monture du télescope doit accélérer en rotation jusqu'à sa vitesse nominale pendant un temps calculé en fonction des capacités du moteur, décélérer, la caméra doit être déclenchée pendant une durée minimum de 115ms avant que le processus de rotation puisse commencer à nouveau.

89. La figure 5 illustre la cinématique simplifiée du fonctionnement. Le cycle de rotation dure 1,17 secondes. Pendant ce cycle, le télescope alterne une phase de déplacement angulaire (50) et une phase d'immobilisation (60) pour la prise de vue. La phase de déplacement (50) présente une étape d'accélération (51) jusqu'à atteindre une vitesse de rotation palier (52) puis une étape de décélération (53) suivi par une brève période de stabilisation, a priori sans mouvement, avant la phase de prise de vue (60) en position immobilisée.

Caractéristiques des stations

90. Le système comprend un minimum de quatre stations, avec des localisations répondant à plusieurs critères :
91. Le ciel doit être de très bonne qualité d'un point de vue astronomique, dans des zones éloignées de toute pollution lumineuse. Ceci se traduit par une magnitude du ciel (la même magnitude définissant la luminosité des étoiles) et doit être supérieure à la magnitude 19/°^2.

92. Le site doit de préférence être en altitude afin de souffrir le moins possible de la turbulence atmosphérique.

93. La météorologie doit permettre un potentiel d'observation de 75% minimum sur l'année.

94. Il doit y avoir de préférence autant de stations dans l'hémisphère Nord que dans l'hémisphère Sud, de manière à obtenir une bonne répartition des mesures pour améliorer la qualité des orbites calculées.

95. La position des stations doit permettre autant que possible une vue complète sur l'arc géostationnaire afin d'en assurer la surveillance complète.

96. Du nombre et de la position des stations dépend la possibilité de faire de l'acquisition en continu, fonction du déplacement de la couverture nocturne.

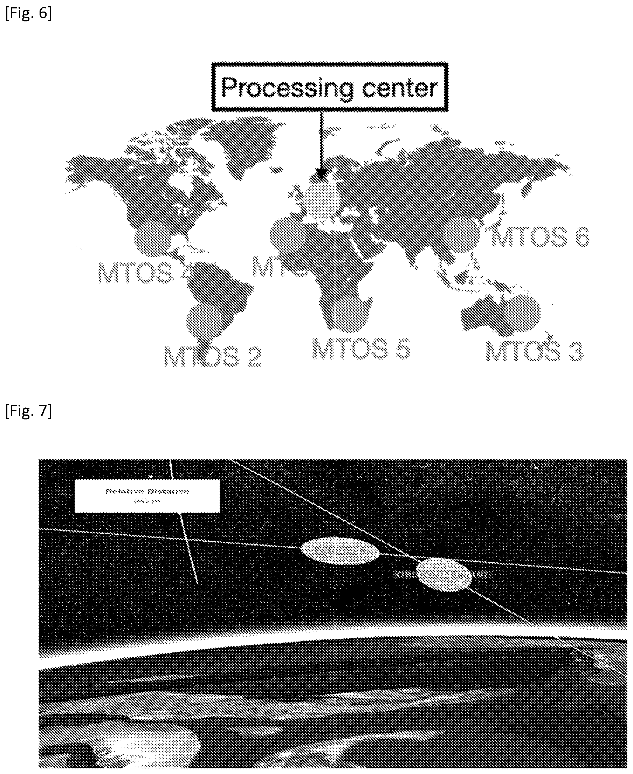

97. La figure 6 montre un exemple de localisation des stations pour un réseau de 6 stations (MTOS) comprenant chacune quatre télescopes rotatifs. Les pays possibles répondant à ces critères peuvent être le Maroc, les Canaries, le Chili, l'Australie, la Namibie, le Nouveau-Mexique et le Japon.

98. Pour mesurer les performances des stations, un simulateur géométrique et photonique a été réalisé. Il permet de simuler les déplacements d'une population de 1 000 000 d'objets de plus de 1 cm autour du globe et de mettre en évidence :

99. Les objets traversant les couronnes d'observations de chaque station.

100. La détectabilité des objets en prenant pour référence un rapport signal sur bruit de 5 en bout de chaine d'acquisition sur le capteur numérique.

101. En fonction des caractéristiques des télescopes et des caméras choisies, en plus de la localisation des stations permet d'estimer que les stations permettront la création d'un catalogue de plusieurs dizaines de milliers d'objets spatiaux en orbite terrestre, toutes orbites confondues.

Traitement des données.

102. Les prises de vue astrophotographique des objets spatiaux s'inscrivent dans une chaine de traitement complète permettant de déterminer les trajectoires orbitales des objets détectés. Ces trajectoires sont ensuite propagées, cette opération consistant à déterminer les positions de l'objet dans le futur (une dizaine de jours). Ces dernières permettent de calculer les rapprochements entre objets les plus critiques et de calculer très précisément les paramètres de la collision probable (date et heure de collision, distance entre les objets, probabilité de collision, distribution spatiale de cette probabilité).

103. La figure 7 est une illustration d'une collision prédite et la mise en évidence par des ellipsoïdes les incertitudes sur les positions, permettant d'établir les probabilités de collision.

Traitement des données

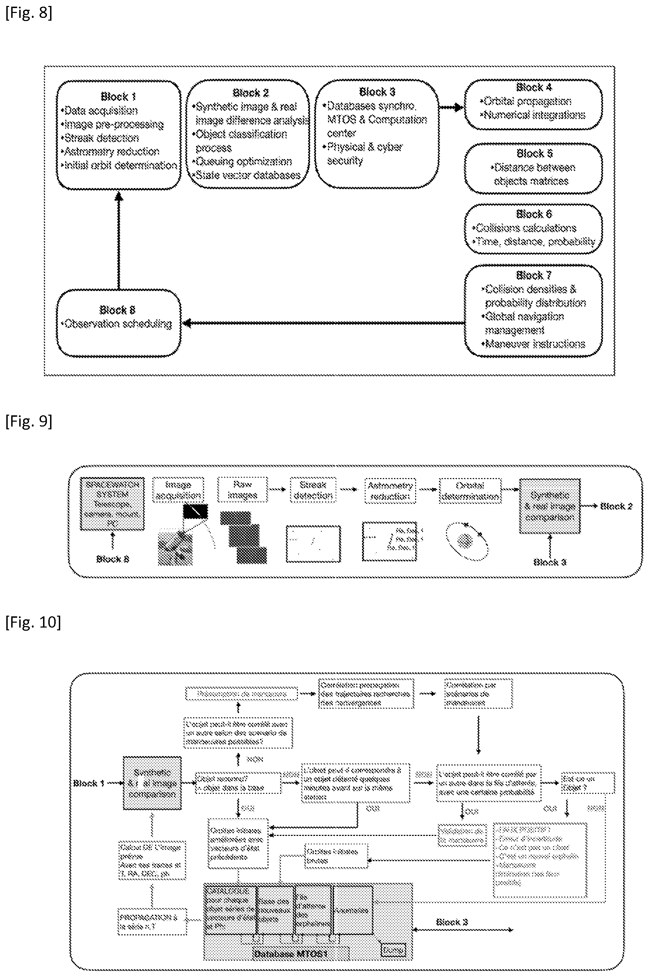

104. La figure 8 représente une vue schématique de l'architecture fonctionnelle. Les blocs fonctionnent en connexion les uns avec les autres, formant une boucle d'entités de calcul cohérente, où :

- Le bloc 1 concerne des traitements locaux, au niveau d'une station, pour l'acquisition des données, le pré-traitement des images, la détection des trajectoires, les calculs astronomiques et la détermination de l'orbite initiale
- Le bloc 2 concerne des traitements de détection des différentes entre images réelles et images virtuelles et l'analyse des différences, la classification des objets, l'optimisation des files d'attentes et le calcul de la base de données des vecteurs d'état
- Le bloc 3 concerne la synchronisation des bases de données locales et la centralisation des calculs et la sécurité numérique des données
- Le bloc 4 réalise la projection orbitale et les intégrations numériques
- Le bloc 5 concerne le calcul des distances entre les objets et la construction d'une matrice des distances
- Le bloc 6 concerne le calcul des risques, probabilités, distances et instant des collisions
- Le bloc 7 concerne le calcul probabilistique des risques et densités de collision ainsi que le calcul des données de navigation, d'évitement et d'instructions de manœuvres
- Le bloc 8 concerne la programmation des traitements en fonction des priorités d'observation.

105. Le bloc 1 concerne le traitement des données provenant des systèmes de caméra et des télescopes, pour chacune des stations locales. Les traitements sont effectués dans des unités informatiques dédiées et locales. Ces traitements comprennent l'amélioration des images, la détection des traînées, la réduction astrométrique et la détermination de l'orbite initiale.

106. Les algorithmes utilisés pour la détection des traînées sont connus et peuvent être améliorés grâce à un algorithme d'apprentissage automatique supervisé. Le flux de données est d'environ 1 image/s, potentiellement pour 24 systèmes de télescopes rotatifs sur 6 stations MTOS (Multi-Telescopes Observation Stations). La taille typique des images est de 32 Mbytes (images monochromatiques, codées sur 16 bits, images de 16 mégapixels). Aucun mémoire tampon n'est prévue pour réduire le temps de traitement, et la détection de traînées permet d'éliminer les images sans intérêt et ainsi réduire la capacité de stockage nécessaire. Il est important de noter que les données en sortie de ce premier bloc de traitement est une donnée de type texte avec des tailles très réduites. En effet, il n'est pas concevable pour des raisons de débit réseau dans des endroits éloignés et sur des grandes distances, de faire transiter de la donnée de type image.

107. La figure 9 représente l'architecture fonctionnelle du bloc de traitement 2 de classification des objets. Ce bloc 2 a pour fonction la mise à jour en permanence du catalogue des trajectoires des objets spatiaux. Les bases de données sur les sites d'observation locaux et celles centralisées doivent donc être synchronisés en permanence.

108. Afin d'optimiser la gestion de la file d'attente des objets spatiaux, les étapes suivantes sont mises en œuvre dans ce bloc 2 :

- Calcul périodique d'une image théorique et comparaison avec l'image réelle, par exemple pour chaque seconde d'acquisition.

- Identification et analyse des différences entre l'image théorique et l'image réelle. Toutes les incertitudes liées à l'acquisition des données apparaissent à ce stade : erreur instrumentale, perturbations atmosphériques, objet spatial avec variation d'illumination due à une rotation ou à un culbutage, satellite manquant suite à une manœuvre, satellite réapparaissant suite à une manœuvre, nouvel objet spatial causé par un nouveau lancement, séparation partielle d'un satellite existant ou collision ou explosion, nouvel objet spatial existant grâce à une meilleure détection.

109. Une méthodologie très prometteuse pour améliorer les performances du processus de mise en file d'attente reste l'augmentation de la corrélation entre les objets qui sont détectés à la position et à l'heure de différents objets avec les ensembles d'images provenant de tous les MTOS. Idéalement, l'algorithme devrait apprendre à détecter, avec un certain niveau de confiance, la relation entre deux objets séparés dans l'espace et le temps. Le résultat serait stocké dans une liste temporaire, en attendant qu'une autre mesure soit effectuée pour confirmer ou rejeter si aucune corrélation ne peut être établie après un certain temps.

110. L'analyse de différence entre les images synthétiques et les images réelles n'est pas une tâche simple. Chaque trajectoire doit être envoyée dans une sous-catégorie de la base de données principale. Le cas le plus simple est celui où l'objet est directement identifié comme correspondant à un autre dans la base de données. Cela signifie que la position dans l'image reste dans une tolérance par rapport à la position prédite. Une deuxième couche d'analyse doit être donnée pour tous les autres cas. Si elle n'est pas correctement effectuée, le nombre d'objets dans la file d'attente augmente de façon spectaculaire, à tel point que les données ne peuvent plus du tout être exploitées. Cette partie du processus permet de classer chaque objet du flux de données de la trajectoire, avec la plus petite mémoire tampon possible dans la file d'attente, en temps quasi réel. L'intelligence artificielle pourrait être une solution pour résoudre le problème et améliorer les performances avec le temps et l'expérience. A la fin de ce bloc, toutes les bases de données sont les mêmes sur les sites différents et incluent tous les vecteurs d'état de l'objet contenant : 3 valeurs pour la position, 3 valeurs pour la vitesse et 36 valeurs pour la covariance de chaque objet en position et en vitesse. D'autres éléments peuvent être ajoutés au vecteur d'état, en fonction des calculs demandés (comme le rapport masse/surface dans le cas de la rotation ou du culbutage, ou des caractéristiques photométriques sur l'objet).

111. Le bloc 3 concerne la synchronisation en temps réel entre les différentes bases de données locales des sites MTOS et le centre de calcul. La qualité de l'image synthétique dépend de l'achèvement de la base de données à un moment donné, pour chaque station, pour chaque système local. Comme les stations MTOS sont éloignées les unes des autres, le matériel du réseau doit être suffisamment robuste et fiable pour obtenir la synchronisation le plus rapidement possible. Le réseau et les liaisons doivent être sécurisés physiquement et cyber-sécurisés pour assurer la meilleure protection des données sensibles. Il est à noter que les données circulant entre les stations pour obtenir cette synchronisation sont des données texte.

112. Le bloc 4 concerne le calcul des vecteurs d'état de la base de données, et le calcul des propagations orbitales avec une intégration numérique à 15 s d'intervalle pour une période de 5 jours. Entre 50 000 et 100 000 calculs élémentaires sont nécessaires pour intégrer numériquement un vecteur d'état à un autre, potentiellement pour plusieurs milliers ou centaines de milliers d'objets. Pour un objet entrant dans la base de données, en moyenne 75 000 calculs élémentaire et, une propagation de 5 jours à 10 s d'intervalle d'intégration, cela représente 3.109 calculs élémentaires. Sur la base de 200 000 mesures par jour, la fréquence moyenne serait de plus de 20 valeurs de donnée entrante par seconde, ce qui représente 6.1010 calculs par seconde.

113. Le bloc 5 concerne le calcul des distances entre tous les objets pour chaque temps d'intégration. Comme hypothèse de base, on peut considérer que la moitié des objets ne peuvent pas entrer en collision les uns avec les autres. Cela représenterait 100000 x 100000 matrices contenant 2,5.109 valeurs, avec un total de 8640 pas pendant 5 jours, ce qui équivaut à plus de 40 000 000 matrices à tenir à jour.

114. Le bloc 6 concerne le calcul des collisions à l'aide des différences entre un instant T+1 et un instant T pour une paire d'objets donnée. Le temps et la distance des collisions peuvent être calculés avec une probabilité connexe, ce qui donne un autre ensemble de 40 000 000 de matrices.

115. Le bloc 7 concerne la couche d'intelligence fila e, qui traite des probabilités et des densités de collision, de la gestion de la navigation globale et de la génération automatique d'instructions aux opérateurs de satellites.

116. Le bloc 8 utilise les données du bloc 7 et éventuellement du bloc 6 pour établir les priorités d'observation et la programmation des instruments qui en résulte, en particulier lorsque les congestions deviennent importantes ou que des mesures spéciales doivent être effectuées (télémétrie laser par exemple).

## Revendications

1. - Système de détection de la trajectoire d'objets célestes mobiles par un système formé par une pluralité de télescopes (1 à 4) rotatifs autour chacun autour de son axe zénithal, orientés chacun avec une hauteur comprise entre 35 et 85°, chacun desdits télescopes présentant un champ de vue compris entre 2 et 6 degrés carrés et comportant un capteur de NxM pixels d'une largeur L chacun, le système comportant en outre un calculateur central pour enregistrer les données horodatées fournies correspondant à chacune des images de chacun des capteur de chacun desdits télescopes (1 à 4) dans lequel lesdites données comprennent, pour chacune des images, les coordonnées horodatées avec un précision d'au moins la milli-seconde du début et de la fin de chaque trace enregistrée pendant le temps d'exposition, lesdites coordonnées du début de chaque trace et de la fin de chaque trace étant déterminées par réduction astrométrique par mise en correspondance du motif d'étoiles fixes de chaque image avec les données d'un catalogue d'étoiles, ledit calculateur central exécutant des traitements pour l'estimation des trajectoires orbitales pour chaque objet mobile afin de déterminer pour chacun desdits objets s'il appartient ou pas à une trajectoire orbitale, et des traitements pour enregistrer un catalogue des paramètres orbitaux desdits objets mobiles.

2. - Système de détection de la trajectoire d'objets mobiles selon la revendication 1 dans lequel lesdits télescopes (1 à 4) sont animés par une rotation sautante.

3. - Système de détection de la trajectoire d'objets mobiles selon la revendication 1 ou dans lequel le nombre de pas de rotation par secondes desdits télescopes (1 à 4) est déterminé par la relation P x C = 360 . Cos E / N / T avec :

   • V: vitesse de rotation de l'objet relative à la position de l'observateur à une altitude et élévation donnée C: champ vertical et horizontal de la caméra
   • N: Nombre de télescopes
   • T: temps de traversée de l'objet dans le champ C
   • P: nombre de pas de rotation de C degré horizontaux par seconde
   • E: Élévation d'objet par rapport au plan horizontal au pied de l'observateur
   •

$$C = T \times V$$

4. - Système de détection de la trajectoire d'objets mobiles selon la revendication 1 dans lequel le système supporte quatre télescopes (1 à 4) écarté chacun de 90°.

5. - Système de détection de la trajectoire d'objets mobiles selon la revendication 1 dans lequel le système comprend une plateforme (10) supportant quatre télescopes (1 à 4) dont les axes d'observation sont écartés de 90°.

6. - Système de détection de la trajectoire d'objets mobiles selon la revendication précédente dans lequel ladite plateforme (10) est animé d'un mouvement de rotation sautant avec des pas de 11,25°.

**Patentansprüche**

1. System zur Erfassung der Bahn beweglicher himmlischer Objekte durch ein System, das aus einer Vielzahl von Teleskopen (1 bis 4) gebildet wird, die sich jeweils um ihre Zenitachse drehen, die jeweils mit einer Höhe zwischen 35 und 85° ausgerichtet sind, wobei jedes der Teleskope ein Sichtfeld zwischen 2 und 6 Quadratgrad besitzt und einen Sensor mit jeweils NxM Pixeln mit einer Breite L aufweist, wobei das System weiter einen zentralen Rechner zum Aufzeichnen der bereitgestellten Zeitstempeldaten aufweist, die jedem der Bilder jedes der Sensoren jedes der Teleskope (1 bis 4) entsprechen, wobei
   die genannten Daten, für jedes der Bilder, die mit einem Zeitstempel versehenen Koordinaten mit einer Genauigkeit von mindestens einer Millisekunde des Beginns und des Endes jeder während der Belichtungszeit aufgezeichneten Spur umfassen, wobei die genannten Koordinaten des Beginns jeder Spur und des Endes jeder Spur durch astrometrische Reduktion durch Abgleichen des Musters der Fixsterne jedes Bildes mit den Daten eines Sternenkatalogs bestimmt werden, wobei der zentrale Rechner Verarbeitungen zur Schätzung der Orbitalbahnen für jedes bewegliche Objekt durchführt, um für jedes der Objekte zu bestimmen, ob es zu einer Orbitalbahn gehört oder nicht, und Verarbeitungen zum Speichern eines Katalogs der Orbitalparameter der beweglichen Objekte.

2. System zur Erfassung der Bahn beweglicher Objekte nach Anspruch 1, wobei die genannten Teleskope (1 bis 4) durch eine springende Drehung bewegt werden.

3. System zur Erfassung der Bahn beweglicher Objekte nach Anspruch 1 oder 2, wobei die Anzahl der Drehschritte pro Sekunde der Teleskope (1 bis 4) durch das Verhältnis P x C = 360 . E / N /T bestimmt wird mit:

   • V: Drehgeschwindigkeit des Objekts relativ zu der Position des Betrachters bei einer Höhe und gegebene Erhebung C: vertikales und horizontales Sichtfeld der Kamera
   • N: Anzahl der Teleskope
   • T: Durchfahrtszeit des Objekts in Feld C
   • P: Anzahl der horizontalen Drehschritte von C Grad pro Sekunde
   • E: Erhebung des Objekts in Bezug auf die horizontale Ebene am Fuß des Betrachters
   •

$$C = T \times V.$$

4. System zur Erfassung der Bahn beweglicher Objekte nach Anspruch 1, wobei das System vier Teleskope (1 bis 4) mit einem Abstand von jeweils 90° unterstützt.

5. System zur Erfassung der Bahn beweglicher Objekte nach Anspruch 1, wobei das System eine Plattform (10) umfasst, die vier Teleskope (1 bis 4) unterstützt, deren Beobachtungsachsen um 90° versetzt sind.

6. System zur Erfassung der Bahn beweglicher Objekte nach dem vorhergehenden Anspruch, wobei die Plattform (10) durch eine springende Drehbewegung in Schritten von 11,25° angeregt wird.

**Claims**

1. A system for detecting the path of moving celestial objects using a system formed by a plurality of telescopes (1 to 4), each rotating about its zenith axis, each oriented at an elevation between 35 and 85°, each of said telescopes having a field of view ranging from 2 to 6 square degrees and comprising a sensor with NxM pixels, each with a width L, the system also comprising a central computer to record the supplied time-stamped data corresponding to each image from each sensor of each of said telescopes (1 to 4), wherein
   said data comprise, for each image, timestamped coordinates with an accuracy of at least one millisecond for the start and end of each trace recorded during the exposure time, said coordinates for the start and end of each trace being determined by astrometric reduction by matching the fixed-star pattern of each image with the data from a star catalogue, said central computer executing processing operations to estimate the orbital trajectories of each moving object in order to determine, for each of said objects, whether or not it belongs to an orbital path, as well as processing operations to record a catalogue of the orbital parameters of said moving objects.

2. The system for detecting the path of moving objects according to claim 1, wherein said telescopes (1 to 4) are driven in a jumping rotation.

3. The system for detecting the path of moving objects according to claim 1 or 2, wherein the number of rotation steps per second of said telescopes (1 to 4) is determined by the equation P x C = 360 . Cos E / N / T with:

   • V: rotational speed of the object relative to the position of the observer at a given altitude and elevation C: vertical and horizontal field of the camera
   • N: Number of telescopes
   • T: time lapsed while the object crosses the field C
   • P: number of steps required to rotate by C horizontal degrees per second
   • E: Object elevation with respect to the horizontal plane at the foot of the observer
   •

$$C = T \times V.$$

4. The system for detecting the path of moving objects according to claim 1, wherein the system supports four telescopes (1 to 4), each spaced 90° apart.

5. The system for detecting the path of moving objects according to claim 1, wherein the system comprises a platform (10) supporting four telescopes (1 to 4) whose observation axes spaced 90° apart.

6. The system for detecting the path of moving objects according to the preceding claim, wherein said platform (10) is driven in a jumping rotational movement with steps of 11.25°.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

EP 4 308 460 B1

[Fig. 11]

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3018612
- WO 2015136102 A
- US 2013264463 A
- US 7105791 B
- EP 1167997 B1